# EUROPÄISCHE PATENTSCHRIFT

(11) **EP 0 995 472 B1**
(45) Veröffentlichungstag und Bekanntmachung des Hinweises auf die Patenterteilung: **03.11.2004**
(21) Anmeldenummer: 99101699.9
(22) Anmeldetag: 09.02.1999
(51) Int. Cl.: B01D 3/06, B01D 5/00, B01D 1/28, B01D 1/30

(54) **Vakuumdestillationsanlage und Verwendung derselben zur Aufkonzentration von organisch-wässrigen Lösungsmittelgemischen**
Installation for vacuumdistillation and using the same for the concentration of organic-aqueous solvent mixtures
Installation de destillation sous vide et son utilisation pour la concentration des mélanges de solvants organiques et aqueuses

(30) Priorität: 23.10.1998 EP 98119797
(43) Veröffentlichungstag der Anmeldung: 26.04.2000
(73) Patentinhaber: Bionorica AG, 92318 Neumarkt (DE)
(72) Erfinder: Joseph, Heinz Walter, Dr., 92348 Berg (DE); Rannow, Michael Dipl.-Chem., 53577 Neustadt-Fernthal (DE); Popp, Michael, 91207 Lauf (DE)
(74) Vertreter: Schwabe - Sandmair - Marx

(56) Entgegenhaltungen:
- EP-A- 0 600 203
- WO-A-93/24198
- WO-A-97/20606
- DE-A- 4 129 076
- DE-U- 29 504 345
- FR-A- 2 435 521
- US-A- 4 305 790

## Beschreibung

Die vorliegende Erfindung betrifft eine Vakuumdestillationsanlage sowie ein Verfahren zur Aufkonzentrierung organisch-wässriger Lösungsmittelgemische, insbesondere von Spissumextrakten unter Verwendung dieser Anlage.

Ein Weg zur Herstellung von Arzneimitteln auf Pflanzenbasis besteht in der Extraktion des Pflanzenmaterials und Weiterverarbeitung der erhaltenen Extrakte und Tinkturen zu Trockenextrakten. Üblicherweise werden wässrige, alkoholische oder gemischt wässrig-alkoholische Extrakte hergestellt, wobei meistens Ethanol als alkoholische Komponente eingesetzt wird. Die Extrakte können jedoch auch weitere organische Lösungsmittel, wie Methanol, Propanol, Butanole wie Ether oder Ketone (insbesondere Ethylether und Aceton) enthalten. Die so erhaltenen Extrakte oder Tinkturen werden entweder als solche angewandt oder zu sogenannten Spissumextrakten eingeengt. Diese können anschließend zu Trockenextrakten verarbeitet werden. Die Aufkonzentration von organisch-wässrigen Lösungsmittelgemischen erfolgt normalerweise durch Blasen- oder Oberflächenverdampfung. Dadurch kann es durch den Kontakt mit heißen Oberflächen zu unerwünschten Umwandlungen kommen, was zu einer Verringerung der Wirkstoffgehalte führen kann.

Da bei einer Destillation des Standes der Technik die leichter flüchtige Komponente des Lösungsmittelgemisches zuerst abdampft, kommt es zu einer prozentualen Erhöhung des Wasseranteiles. Dieser Wasseranteil ist ursächlich dafür verantwortlich, daß Keimwachstum begünstigt wird. Die Keimzahlgrenzen sind für Bakterien, Hefen und Schimmelpilze in den einschlägigen Pharmakopoeen festgelegt.

Bei Wahl eines nicht sterilen Ausgangsproduktes, wie es bei der Produktion von Pflanzenextrakten unvermeidlich vorliegt, hängt die Keimzahl im fertigen Endprodukt unmittelbar mit der Verarbeitungsdauer in der nicht alkoholischen Phase zusammen. Zusätzlich salzen einzelne Bestandteile der Extrakte aus, so daß eine Entmischung der Substrate entsteht. Weiterhin besteht das Problem, daß bei Lösungsmittelgemischen zunächst das leichter flüchtige Lösungsmittel abdestilliert wird, sich das Verhältnis der Lösungsmittel zueinander im Sumpfprodukt daher stetig ändert. Eine Verringerung des Alkoholgehaltes, der bei wäßrigen, alkoholischen Lösungsmittelgemischen die leichter flüchtige Komponente darstellt, führt bei Pflanzenextrakten jedoch zur Ausfällung von extrahiertem Material, was nicht erwünscht ist. Im Extremfall bedeutet dies, daß sich die Bodenproduktverdichtung nur realisieren läßt, indem im Batchverfahren zuerst der Alkohol und in einem zweiten Durchgang das Wasser abdestilliert wird. Dies führt jedoch zur Entmischung des Produktes.

Zur Spissumtrocknung wurde ein Verfahren vorgesehen, das schonend mit Hilfe eines mehrschenkligen Rührwerks die Trockenzeit erheblich verringert (DE 195 25 026.5). Um zu vermeiden, daß dieses Verfahren zur Spissumherstellung benötigt wird, wäre eine vorherige Aufkonzentration unter gleich schonenden Bedingungen notwendig. Hierzu ist großtechnisch kein Verfahren bekannt.

Das Eindicken oder Eindampfen erfolgt üblicherweise mittels herkömmlicher Destillation. Die herkömmliche Destillation zur Eindickung oder Eindampfung von Spissumextrakten oder allgemeiner wäßriger, alkoholischer Lösungen, weist jedoch verschiedene Nachteile auf. Erstens benötigt man, um stark polare Lösungen wie Wasser oder Alkohol zu verdampfen, viel Energie. Beispielsweise werden zur Verdampfung von einem Kilo Wasser bei herkömmlichen Verdampfersystemen ca. 1 KW Leistung benötigt, was dem 15-fachen der zur Destillation von apolaren Lösungsmitteln wie beispielsweise Toluol benötigten Menge entspricht. Dies erfordert wiederum auf apparativer Seite, daß die Wärmedurchgangszahlen besonders hoch sind und stetig Wärme zugeführt werden muß. Daraus ergibt sich, daß Prozesse ohne Wärmerückgewinnung äußerst unwirtschaftlich sind.

Weiterhin muß, wie oben angedeutet, bei der herkömmlichen Destillation die Wärme mit hoher Temperaturdifferenz über verfahrenstechnisch begrenzten Flächen zur Blasenbildung zugeführt werden. Dies steht im Widerspruch zur starken Temperaturempfindlichkeit der meisten pflanzlichen Wirkstoffe, zu deren Schutz meistens unter Anlegung eines Vakuums destilliert wird. Dadurch läßt sich zwar die Arbeitstemperatur des Destillationsverfahrens senken, die Notwendigkeit der Wärmezufuhr besteht jedoch weiterhin und ein Zuführen der Wärme führt zu einer erheblichen Grenzflächenbelastung im einzuengenden Bodenprodukt.

Schließlich besteht bei der Eindampfung von wässrig-alkoholischen Pflanzenextrakten bei einigen Pflanzen zusätzlich noch das Problem der Schaumbildung. Um eine Schaumbildung zu vermeiden, muß die Oberflächenspannung des Bodenproduktes durch den Zusatz von Alkohol herabgesetzt werden. Ein Ausdestillieren des Alkohols verstärkt das Problem der Schaumbildung. Im Extremfall führt diese Schaumbildung zur Flutung der Destillationsapparatur, so daß das Verfahren abgebrochen und der Produktionsablauf gestoppt werden muß.

Zur Lösung des Problems des hohen Energieverbrauchs sind aus anderen Bereichen der Technik unterschiedliche Destillationsverfahren mit Wärmerückgewinnung bekannt. Unter diesen hat die offene Wärmepumpe mit mechanischer Verdichtung die besten Kennzahlen. So werden hier für die Destillation von Wasser 50 Watt/kg benötigt, was einen Energieverbrauch entspricht, der 20-mal geringer ist als bei der herkömmlichen Destillation. Genauer arbeitet die aus dem Stand der Technik bekannte Destillationsanlage nach dem Prinzip der offenen Wärmepumpe mit mechanischer Brüdenverdichtung (Verdichtung des Kopfprodukts). Die im Verdampfer unter Vakuum freigesetzten Kopfprodukte werden vom Verdichter volumetrisch abgezogen, verdichtet, dabei weiter erwärmt und anschließend in einem Kondensator niedergeschlagen. Die Kondensationsenergie wird der Verdampfung direkt zugeführt. Dadurch wird ein energetischer Kreisprozeß realisiert, der ohne Heizung und Kühlung nur durch die Verdichterleistung in Gang gehalten wird. Dies gestattet die beachtliche Verringerung der erforderlichen Wärmemenge, insbesondere der Kühlenergie.

In Abhängigkeit von der zu destillierenden Lösung kann die Anlage mit einem Blasenverdampfer oder einem Flash-Verdampfer betrieben werden. Bei einem Blasenverdampfer liegt der Wärmetauscher im Sumpfraum des zu destillierenden Mediums, während bei dem Flash-Verdampfer das Sumpfprodukt mit einer Umwälzpumpe durch den Wärmetauscher gefördert, erwärmt wieder in den Verdampfer geführt und dort zur Destillation entspannt wird. Diese Anlagen werden zur Aufkonzentration beispielsweise von Bädern und Spülwässern aus der Entfettung, Phosphatierung, Chromatierung und Galvanik, für Kühlschmieremulsionen, Gleitschleifemulsionen, Kompressorenkondensate oder Waschlösungen aus Waschkabinen und Hochdruckreinigern angewandt. Das Destillat (Abwasser) kann dem herkömmlichen Abwasser zugeleitet werden, während ein hochkonzentriertes, zu entsorgendes Konzentrat als Sumpfprodukt entnommen wird. Bei Lösungsmittelgemischen tritt bei dieser Art der Destillationsführung jedoch weiterhin das Problem auf, daß das leichter flüchtige Lösungsmittel zunächst abdestilliert wird und sich das Verhältnis der Lösungsmittel zueinander im Sumpfprodukt daher verschiebt und daher in der Aufkonzentrierung begrenzt ist. Auch diese Anlagen des Standes der Technik sind daher zur Aufkonzentration von wässrigen, alkoholischen Lösungen wie Pflanzenextrakten, nicht geeignet.

Es ist Aufgabe der vorliegenden Erfindung, eine Anlage sowie Verfahren bereitzustellen, mit deren Hilfe organisch-wässrige Lösungen, insbesondere Pflanzenextrakte oder Spissumextrakte unter Vermeidung der genannten Probleme aufkonzentriert werden können. Vorzugsweise sollte dies unter für die Inhaltsstoffe möglichst schonenden Bedingungen erfolgen und es sollte eine wahlweise Einstellung des Konzentrationsgrades sowie des Alkoholgehaltes der Lösung, je nach Bedarf, möglich sein.

Gelöst wird diese Aufgabe erfindungsgemäß durch eine Vakuumdestillationsanlage, umfassend
a) einen Flash-Verdampfer (1),
b) einen volumetrischen Brüdenverdichter (12), und
c) einen dem Brüdenverdichter nachgeschalteten mehrstufigen Kondensator (8a, 8b) bei der Mittel zum Rückführen(16a, 16b) mindestens eines Teiles des Kondensates aus einer Kondensationsstufe indas Sumpfprodukt im Flash-Verdampfer vorge-sehen sind, umfassend eine zwischen die Kondensationsstufen zwischengeschaltete Rektifikation (14).

Vorzugsweise dient der Kondensator (8) als Wärmetauscher und ist so angeordnet, daß das Sumpfprodukt (4) vor der Rückführung in den Verdampfer bzw. vor dem Einspritzen in den Flash-Verdampfer (1) als Kühlflüssigkeit für den Kondensator dient (6, 7, 9, 10). Dies geschieht, indem das Sumpfprodukt vor Einspeisung in den Verdampfer als Kühlflüssigkeit am Kondensator vorbeigeführt wird. Dabei nimmt das Sumpfprodukt im Austausch die Koridensationswärme des Destillates auf und wird so wieder auf Destillationstemperatur gebracht. Beim erneuten Einspeisen in den Flash-Verdampfer entspannt sich das Sumpfprodukt, wobei ein Teil des Lösungsmittels verdampft und sich die verbleibende Flüssigkeit abkühlt. Dies fällt wiederum als Sumpfprodukt an, das erneut zur Kühlung dienen kann. Die Führung der "Kühlflüssigkeit" erfolgt gemäß dem Prinzip des Wärmetauschs, wobei diese zunächst mit der kälteren Kondensationsstufe für die am leichtesten flüchtigen Bestandteile des Kopfproduktes in Kontakt gebracht wird, woran sich weitere Kondensationsstufen in Reihenfolge der Flüchtigkeit der niedergeschlagenen Destillationsbestandteile anschließen, bis hin zur Kondensationsstufe für die am schwersten flüchtigen Bestandteile. Bei wässrigen, alkoholischen Lösungsmittelgemischen stellt Wasser den am schwersten flüchtigen Bestandteil des Kopfproduktes und der oder die Alkohol(e) den (die) leichter flüchtigen Bestandteil(e) desselben dar. Die Destillatkondensate werden aus den Kondensationsstufen separat entnommen (16a, 16b).

Zwischen den Kondensationsstufen (8a, 8b) ist eine Rektifikation (14) vorgesehen, um eine bessere Trennung der Kopfproduktbestandteile voneinander zu erzielen. Vorzugsweise sind zwei bis vier, am meisten bevorzugt zwei Kondensationsstufen je nach Zahl der Bestandteile des abzuziehenden Lösungsmittelgemisches vorgesehen.

Erfindungsgemäß wird weiterhin mindestens ein Teil des Kondensates (16a, 16b) mindestens einer Stufe dem Sumpfprodukt mittels hierfür vorgesehener Leitungen wieder zugeführt, bevor dies erneut der Verdampfung zugeleitet wird. Über diesen Zusatz von Kondensat zum Sumpfprodukt kann der überproportional entnommene Anteil des leichter flüchtigen Bestandteiles im Sumpf produkt ersetzt werden und so das Verhältnis der Lösungsmittel untereinander trotz unterschiedlicher Flüchtigkeit konstant gehalten werden. Der leichter flüchtige Bestandteil Alkohol dient erfindungsgemäß als Schleppmittel für den schwerer flüchtigen Bestandteil Wasser, das unterhalb des Azeotrop-Punktes aus dem wässrigen, alkoholischen Lösungsmittelgemisch geschleppt wird. Vorzugsweise wird das Kondensat dem Verdampfer oberhalb des Flüssigkeitspegels des Sumpfproduktes wieder zugeführt. Ebenso kann das Kondensat jedoch dem Sumpfprodukt zugeführt, mit diesen und gegebenenfalls weiterer Lösung (Spissumextrakt) gemischt und die Mischung dem Verdampfer zugeführt werden.

Die Effizienz des Kühlverfahrens läßt sich dadurch steigern, daß Mittel zum aktiven Durchleiten (7) des Bodenproduktes bzw. Sumpfes (4) aus dem Verdampfer durch den Kondensator vorgesehen wird. Hierbei handelt es sich vorzugsweise um eine Umwälzpumpe.

Die erfindungsgemäße Vorrichtung weist vorzugsweise die in den Ansprüchen beschriebenen Merkmale auf.

organisch wässrigen Lösungsmittelgemischen, vorzugsweise Erfindungsgemäß wird außerdem ein Verfahren zur schonenden Aufkonzentrierung von wässrigen, alkoholischen Pflanzenextratkten bereitgestellt, bei dem man
a) die Lösung unter Vakuum (1) entspannt,
b) das Kopfprodukt volumetrisch (12) fördert und verdichtet,
c) das Kopfprodukt in mehreren Stufen (8a, 8b) kondensiert, um dieses in seine schwerer flüchtigen und leichter flüchtigen Bestandteile zu trennen, wobei zwischen den Kondensationsstufen eine Rektifikation vorgesehen ist, und
d) mindestens ein Teil des Kondensates (16a, 16b) mindestens einer Stufe dem Sumpfprodukt (4) wieder zuführt, bevor dieses erneut in Schritt a) eingesetzt wird, bis die gewünschte Aufkonzentrierung erzielt ist.

Vorzugsweise wird das Sumpfprodukt (4) als Kühlflüssigkeit für die Kondensationsstufen eingesetzt, indem es aktiv an den verschiedenen Kondensationsstufen wie oben beschrieben, vorbeigeführt wird (6, 7, 9, 10).

Vorzugsweise wird ein Verfahren zur schonenden Aufkonzentrierung von binären wässrigen, alkoholischen (vorzugsweise ethanolischen) Lösungen, insbesondere Pflanrenetrakten bereitgestellt, bei dem in Schritt c) zwei Kondensationsschritte erfolgen und das Kondensat der zweiten Stufe, bei dem es sich um den leichter flüchtigen Alkohol, insbesondere Ethanol, handelt, dem Sumpfprodukt wieder zugeführt wird. Vorzugsweise wird das Kondensat in einer solchen Menge rückgeführt, daß das Wasser/Alkohol-Verhältnis (Wasser/Ethanol-Verhältnis) der Lösung im Sumpfprodukt konstant bleibt.

Die Verdampfung erfolgt mit Hilfe der Flash-Verdampfung. Die Flash-Verdampfung gestattet das Arbeiten bei niedrigen Temperaturen, unter gleichzeitiger Verminderung der Flächenbelastung des Produktes, Verkürzung der Verweilzeit und homogener Energieaufnahme. Hierdurch wird eine Wärmebelastung der arzneilich wirksamen Bestandteile der Pflanzenextrakte vermieden. Allgemein ist so die Einengung von Lösungen, die wärmeempfindliche Substanzen beinhalten, möglich.

Das Verfahren wird erfindungsgemäß vorzugsweise zur Aufkonzentrierung wässriger, ethanolischer Pflanzendrogenextrakte mit einem Ethanolgehalt von mindestens 20 Vol.-%, vorzugsweise 30 bis 70 Vol.-% verwendet. In diesem Bereich sind die meisten arzneilich wirksamen Bestandteile, insbesondere phenolische Verbindungen und Flavonoide pflanzlichen Ursprungs, löslich. Ein zu weites Hinaufführen des Extraktes in die Wasserphase kann erfindungsgemäß vermieden werden, so daß keine Entmischung des Spissumextraktes auftritt.

Zur Durchführung des erfindungsgemäßen Verfahrens kann die erfindungsgemäße Anlage verwendet werden.

Der vorliegenden Erfindung liegt die Idee zugrunde, Alkohol als Schleppmittel zur Ausdestillation des an sich schwerer flüchtigen Wassers zu verwenden, der ohne zusätzliche Energie aus dem Verfahren gewonnen wird. Zum anderen wird die Temperatur im Wärmeaustauscher durch partielle Kondensation so gesteuert, daß eine gleichzeitige Kondensation und Trennung mehrerer unterschiedlicher Lösungsmittel (Wasser und Alkohol(e)) bei gleichem Druck möglich ist.

Dies wird zum einen durch die volumetrische Dampfförderung (12) erreicht. Bei der volumetrischen Dampfförderung werden die Moleküle der Gasphase von einem (Brüden)-verdichter (12) entsprechend der Zusammensetzung oder den Partialdrücken der Bestandteile im Reaktionsraum abgesaugt. Schaltet man also, wie erfindungsgemäß vorgesehen, zwischen den Verdampfungsprozeß und den Kondensator einen Verdichter bzw. ein volumetrisch förderndes System, wie beispielsweise ein Rootsgebläse, so entsteht hinter dem Verdichter ein definiertes Gemisch, das durch partielle Kondensation zerlegt werden kann.

Anders als gemäß dem Stand der Technik, wird erfindungsgemäß die Rektifikation nicht auf der Verdampferseite eingesetzt, wo der zur Abreicherung notwendige Rücklauf durch externe Wärmeabfuhr und damit Energieverlust gebildet wird, sondern auf der Kondensatseite nach der Verdichtung. Die Kondensation und Rektifikation werden erfindungsgemäß so eingesetzt, daß nicht die hydraulische Energie zur Auftrennung der Dampfdrücke benutzt wird, sondern die Kondensationswärme der kondensierten Fraktionen system-immanent genutzt werden kann, um das Sumpfprodukt auf Arbeitstemperatur zurückzuführen. Weiterhin kann ein ständiger Alkoholreflux als Schleppmittel gefahren werden, ohne dafür zusätzlich über die Verdichtungsarbeit hinaus Energie einsetzen zu müssen.

Auf die Energiebilanz wirkt sich weiterhin günstig aus, daß ein Teil des Kondensates in den Verdampfer bzw. das Bodenprodukt rückgeführt wird, die darin enthaltene Wärme also wiederum zur Erwärmung des durch die Entspannung im Flash-Verdampfer abgekühlten Bodenproduktes verwendet wird. Die Rückführung des Kondensates gestattet somit nicht nur die Verwendung des leichter flüchtigen Lösungsmittelbestandteils als Schleppmittel für höher siedende Bestandteile, sondern trägt auch zur Verringerung des Energiebedarfs des Gesamtverfahrens bei. Weiterhin verringert die Wärmezufuhr über die Rückführung eines Teils des Kondensats die Grenzflächenbelastung des Bodenproduktes, da Wärme nicht von außen über die Grenzfläche zwischen Behälter und Bodenprodukt zugeführt werden muß, sondern mit einer Flüssigkeit eingespeist wird. Dies trägt zur schonenden Aufarbeitung bzw. Einengung bei. Durch Erhalt der Alkoholkonzentration im Bodenprodukt wird zugleich die Entmischung verhindert.

Die Verwendung des leichter flüchtigen Lösungsmittels (Alkohol) als Schleppmittel bzw. dessen Rückführung in das Bodenprodukt und die Aufrechterhaltung der Alkoholkonzentration in demselben löst weiterhin das Schaumproblem, da dieses verstärkt mit Sinken des Alkoholgehaltes des Lösungsmittelgemisches auftritt.

Darüber hinaus gestattet es die erfindungsgemäße Trennung des Kopfproduktes in seine einzelnen Bestandteile, diese separat zu recyclen. So wird erfindungsgemäß das Kopfprodukt durch partielle Kondensation in mehreren Kondensationsschritten zerlegt. Zur besseren Trennung wird dazu eine Rektifikation zwischen die einzelnen Kondensationsschritte zwischengeschaltet. Vorzugsweise wird diese bei der erfindungsgemäßen Vorrichtung zwischen zwei Wärmetauscher gesetzt, so daß sie die nötige Dampfsperre bildet, um die höher siedenden Bestandteile (Wasser) von den leichter siedenden Bestandteilen (Alkohol) getrennt auskondensieren zu lassen. Dieser Effekt läßt sich vorzugsweise dadurch steigern, daß eine Vorvaküumpumpe zusätzlich zum Verdichter eingesetzt wird. Hierbei kann es sich beispielsweise um eine mit Öl betriebene Flüssigkeitsringpumpe handeln. Die einzelnen Kondensate können in relativ reiner Form, soweit sie nicht erfindungsgemäß zurückgeführt werden, entnommen werden.

Im folgenden soll eine bevorzugte Ausführungsform der vorliegenden Erfindung anhand der beigefügten Abbildung beschrieben werden.

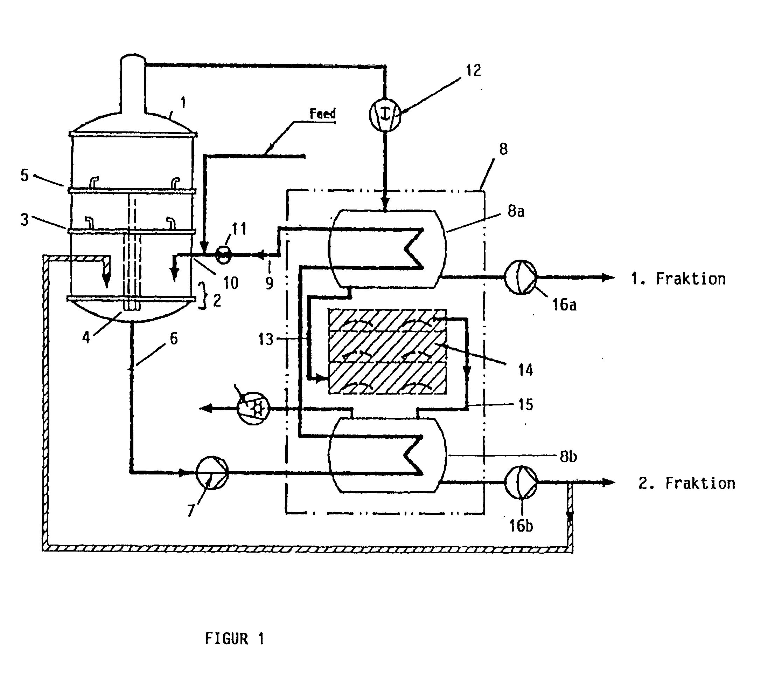

Eine erfindungsgemäße Destillationsanlage, wie in Fig. 1 gezeigt, umfaßt zunächst eine Verdampfereinheit 1 aus einem Verdampfersumpf 2 und damit dem Bereich, in dem die zu verdampfende Flüssigkeit zirkuliert, einen Flüssigkeitsabscheider 3, in dem das bei der Verdampfung mitgerissene Produkt abgeschieden wird und über einen Siphon 4 in die Flüssigkeitsphase zurücklaufen kann, sowie einen Aerosolabscheider 5, in dem die vorgereinigten Brüden- bzw. Kopfprodukte im Verdampferkopf nochmals mit einem Tangentialabscheider gereinigt werden, um hier auch die enthaltenen Aerosole auszuscheiden.

Mittig im Verdampfer sitzt von unten angeordnet eine Sonde (nicht gezeigt), mit der die Füllhöhe im Verdampfer gemessen werden kann. Das durch die Verdampfung abgekühlte Bodenprodukt läuft über ein Ablaufrohr 6 im Verdampferboden der Pumpe 7 zu.

Um eine Strudelbildung oder eine Verstopfung durch abgesetztes Produkt zu vermeiden, ist das Ablaufrohr durch einen Rohrbogen verlängert, so daß über diese Leitung der Verdampfer nicht vollständig leerlaufen kann. Zur vollständigen Entleerung ist daher an der tiefsten Stelle des Verdampferbodens eine zusätzliche Leitung angebracht, die den Restablauf in die Pumpe hinein sicherstellt.

Die Pumpe 7 fördert das Sumpfprodukt durch den Wärmetauscher 8. Dort wird das Bodenprodukt aufgeheizt und über eine Umwälzleitung 9 wieder in die tangentiale Einspritzung 10 im Verdampfer zurückgeführt. Über dieselbe Leitung kann auch weitere Lösung (Feed) zugeführt werden. Die Zuführung erfolgt über ein Füllventil 11 durch den Wärmetauscher in die Umwälzleitung, wobei die Einführung des Feeds in die Umwälzleitung vorzugsweise so konstruiert ist, daß sie gleichzeitig die Drossel darstellt, über die das umwälzende Produkt entspannt, und sich somit das Feed mit dem umwälzenden Bodenprodukt in der Leitung bis zum Verdampfer vermischt.

Die bei der Verdampfung freiwerdenden Brüden- bzw. Kopfprodukte werden vom Brüdenverdichter 12, vorzugsweise einer Wälzkolbenpumpe oder einem Rootsgebläse, abgezogen, verdichtet und gleichzeitig in den Wärmetauscher 8a gedrückt. Vom Wärmetauscher 8a geht im Bodenbereich eine Verbindungsleitung 13 zur Rektifikation 14, so daß die im Wärmetauscher nicht niedergeschlagenen Dämpfe durch die Rektifikation aufsteigen und sodann über eine Verbindungsleitung 15 der Rektifikation in den zweiten Wärmetauscher 8b geführt werden. Dort wird die Restlösung niedergeschlagen. Das Kondensat der Wärmetauscher wird jeweils abgezogen vorzugsweise über Membranpumpen 16a und b ausgefördert. Das Kondensat des zweiten Wärmetauschers wird in Abhängigkeit von der Durchflußregelung mittels eines Ventils in den Kopfbereich des Verdampfers wieder eingespritzt, um hier das Rücklaufverhältnis sicherzustellen.

Im Betrieb des Verfahrens wird der aufzukonzentrierende Spissumextrakt in den Verdampfer eingespeist, entspannt und die dabei entstehenden Dämpfe über den Verdichter abgezogen. Der Destillationsrückstand bzw. das Bodenprodukt fällt in den Sumpfraum und wird dort als Wärmeträgerflüssigkeit an den Wärmetauschern vorbeigeführt. Da über die Leitung ständig neuer Extrakt zugespeist und die über Bodenleitung aufkonzentrierter Extrakt entnommen werden kann, kann das Verfahren kontinuierlich geführt werden. Wahlweise kann auch ein Batch-Verfahren vorgesehen sein. In beiden Fällen läßt sich der Alkoholgehalt des Sumpfproduktes kontinuierlich regeln, und zwar über die Menge des rückgeführten Alkohols. Die Arbeitstemperatur des Verfahrens liegt zwischen 35 und 45°C, vorzugsweise 38 und 42°C. Das anzulegende Vakuum beträgt zwischen 80 mbar und 150 mbar, vorzugsweise 110 mbar und 130 mbar. Nicht rückgeführtes Kondensat kann entnommen und wieder zur Extraktion verwendet, bzw. als nur geringfügig belastetes Produkt entsorgt werden.

Im Ergebnis läßt sich mit dem erfindungsgemäßen Verfahren ein Eindampfverhältnis von 1:10 erzielen. Die Absolutmenge an im Extrakt enthaltenen arzneilich wirksamen Bestandteilen ist nicht verringert, Ausfällungen oder Schaumbildungen treten nicht oder nur in äußerst geringem Umfang auf.

## Patentansprüche

1. Vakuumdestillationsanlage, umfassend
a) einen Flash-Verdampfer (1),
b) einen volumetrischen Brüdenverdichter (12), und
c) einen dem Brüdenverdichter nachgeschalteten mehrstufigen Kondensator (8a, 8b) bei der Mittel zum Rückfiihren (16a, 16b) mindestens eines Teiles des Kondensates aus einer Kondensationsstufe in das Sumpfprodukt im Flash-Verdampfer vorgesehen sind, umfassend eine zwischen die Kondensationsstufen zwischengeschaltete Rektifikation (14).

2. Vakuumdestillationsanlage gemäß Anspruch 1, bei der der Kondensator (8) so angeordnet ist, das das Bodenprodukt (4) vor der Rückführung in den Verdampfer als Wärmeträgerflüssigkeit für den Kondensator dient (6, 7, 9, 10).

3. Vakuumdestillationsanlage gemäß einem der Ansprüche 1 oder 2, derart, dass zwei bis vier Kondensationsstufen vorgesehen sind, zwischen die jeweils eine Rektifikation geschaltet ist.

4. Vakuumdestillationsanlage gemäß Anspruch 1, mit zwei Kondensationsstufen (8a, 8b).

5. Vakuumdestillationsanlage gemäß einem der Ansprüche 1 bis 4 derart gestattet, dass das leichter flüchtige Kondensat dem Bodenprodukt zugeführt, mit diesem gemischt und die Mischung dem Verdampfer zugeführt wird.

6. Vakuumdestillationsanlage gemäß einem der Ansprüche 1 bis 5, umfassend außerdem Mittel zur Zwangszirkulation (7) des Sumpfproduktes durch den Kondensator.

7. Vakuumdestillationsanlage gemäß Anspruch 6, bei dem das Mittel zur Zwangszirkulation (7) eine Umwälzpumpe ist.

8. Vakuumdestillationsanlage gemäß einem der Ansprüche 1 bis 7, die zusätzlich zum Verdichter eine Vorvakuumpumpe aufweist.

9. Vakuumdestillationsanlage gemäß Anspruch 8, bei der die Vorvakuumpumpe eine mit Öl betriebene Flüssigkeitspumpe oder Membranpumpe darstellt.

10. Vakuumdestillationsanlage gemäß einem der Ansprüche 1 bis 9, umfassend auf der Destillatseite Mittel zum Abscheiden (3) von während der Flash-Verdampfung vom Kopfprodukt mitgerissenen festen und/oder flüssigen Bestandteilen.

11. Verfahren zur schonenden Aufkonzentrierung von organisch wässrigen Lösungsmittelgemischen, bei dem man
a) die Lösung unter Vakuum (1) entspannt,
b) das Kopfprodukt volumetrisch (12) fördert und verdichtet,
c) das Kopfprodukt in mehreren Stufen (8a, 8b) kondensiert, um dieses in seine schwerer flüchtigen und leichter flüchtigen Bestandteile zu trennen, wobei zwischen den Kondensationsstufen eine Rektifikation (14) vorge-sehen ist, und
d) mindestens ein Teil des Kondensates (16a, 16b) mindestens einer Stufe dem Sumpfprodukt (4) wieder zuführt, bevor dieses erneut in Schritt a) eingesetzt wird, bis die gewünschte Aufkonzentrierung erzielt ist.

12. Verfahren nach Anspruch 11, worin es sich bei dem organisch wäßrigen Lösungsmittelgemischen um wässrige, alkoholische Pflanzenextrakte handelt.

13. Verfahren gemäß Anspruch 11, bei dem das Sumpfprodukt (4) als Wärmeträgerflüssigkeit (6, 7, 9, 10) für die Kondensationsstufen (8a, 8b) eingesetzt wird.

14. Verfahren gemäß einem der Ansprüche 11 bis 13, bei dem ausgehend von binären Lösungen in Schritt c) 2 Kondensationsschritte (8a, 8b) erfolgen und bei dem mindestens ein Teil des Kondensates der zweiten Stufe (16b) dem Sumpfprodukt (4) wieder zugeführt wird.

15. Verfahren gemäß einem der Ansprüche 12 und 14, bei dem das Kondensat (16b) in einer solchen Menge rückgeführt wird, dass das Wasser/Alkohol-Verhältnis der Lösung im Bodenprodukt (4) konstant bleibt.

16. Verfahren gemäß einem der Ansprüche 11 bis 15, bei dem das Bodenprodukt (4) mit Hilfe der Flash-Verdampfung destilliert wird.

17. Verfahren gemäß einem der Ansprüche 11 bis 16 zur Aufkonzentrierung wässriger, ethanolischer Pflanzendrogenextrakte mit einem Ethanolgehalt von mindestens 20 Vol.-%, vorzugsweise 30 bis 70 Vol.-%.

18. Verfahren nach Anspruch 11, bei dem das Kondensat der letzten Kohdensationsstufe vollständig oder teilsweise in den Verdampfer zurückgeführt wird.

19. Verfahren nach Anspruch 11, bei dem das Kondensat dem Verdampfer oberhalb des Flüssigkeitspegels des Bodenproduktes zugeführt wird.

20. Verfahren gemäß einem der Ansprüche 11 bis 19, **dadurch gekennzeichnet, dass** es mit einer Vakuumdestillationsanlage gemäß einem der Ansprüche 1 bis 10 durchgeführt wird.

21. Verwendung einer Anlage gemäß einem der Ansprüche 1 bis 10 zur Aufkonzentrierung von organisch wässrigen Lösungsmittelgemischen.

22. Verwendung nach Anspruch 21, worin es sich bei dem organisch wässrigen Lösungsmittelgemisch um einen wässrigen, alkoholischen Pflanzenextrakt handelt.

## Claims

1. A vacuum distillation plant, comprising
a) a flash evaporator (1)
b) a vapour concentration means (12); and
c) a multi-stage condenser (8a, 8b) positioned downstream of the vapour concentration means
wherein means for recycling (16a, 16b) at least part of the condensate from a condensation stage to the bottoms product are included, wherein rectifications (14) are interposed between the condensation stages.

2. A vacuum distillation plant according to claim 1, wherein the condenser (8) is positioned in such way that the bottoms product (4) serves as a heat carrier liquid for the condenser (6, 7, 9, 10) before being recycled to the evaporator.

3. A vacuum distillation plant according to any of the claims 1 to 2 wherein two or four condensation stages are provided with a rectification interposed between each of said condensation stages.

4. A vacuum distillation plant according to claim 1 comprising 2 condensation stages (8a, 8b).

5. A vacuum distillation plant according to any of the claims 1 to 4, wherein the condensate is introduced into and mixed with the bottoms product and the mixture is introduced into the evaporator.

6. A vacuum distillation plant according to any of the claims 1 to 5, additionally comprising means (7) for actively directing the bottoms product through the condenser.

7. A vacuum distillation plant according to claim 6 wherein the means (7) for actively directing the bottoms product is a circulating pump.

8. A vacuum distillation plant according to any of the claims 1 to 7 comprising a pre-vacuum pump in addition to the concentration means.

9. A vacuum distillation plant according to claim 8, wherein the pre-vacuum pump is an oil-driven liquid-ring pump.

10. A vacuum distillation plant according to any of the claims 1 to 9, comprising a means on the distillate side for depositing (3) solid and/or liquid components entrained by the overhead product during flash evaporation.

11. A process for the inoffensive concentration of aqueous alcoholic solutions wherein
a) the solution is expanded under vacuum (1);
b) the overhead product is transported volumetrically (12) and concentrated;
c) the overhead product is condensed in several stages (8a, 8b) for separation into its less volatile and more volatile components wherein rectification (14) is interposed between condensation stages; and
d) at least part of the condensate (16a, 16b) of at least one stage is recycled to the bottoms product (4) before said bottoms product is reused in step a) until the desired concentration has been reached.

12. The process of claim 11, wherein the organic aqueous solvent mixture is an aqueous, alcoholic plant extract.

13. A process according to claim 11 wherein the bottoms product (4) is used as the heat carrier liquid (6, 7, 9, 10) for the condensation stages (8a, 8b).

14. A process according to claim 11 or 13, wherein two condensation steps (8a, 8b) are carried out in step c) starting from binary solutions and wherein at least part of the condensate of the second stage (16b) is recycled to the bottoms product (4).

15. A process according to any of the claims 12 and 14, wherein the condensate (16b) is recycled in such an amount that the water/alcohol ratio of the solution in the bottoms product (4) remains constant.

16. A process according to any of the claims 11 to 15, wherein the bottoms product (4) is distilled by flash evaporation.

17. process according to any of the claims 11 to 16 for concentrating aqueous ethanolic plant drug extracts having an ethanol content of at least 20 vol.-%, preferably 30 to 70 vol.-%.

18. A vacuum distillation plant according to claim 11, wherein all or part of the condensate of the last condensation stage is recycled to the evaporator.

19. A vacuum distillation plant according to the claim 11 wherein the condensate is fed into the evaporator above the liquid level of the bottoms product.

20. A process according to any of the claims 11 to 19, **characterised in that** it is conducted with a vacuum distillation plant according to any of the claims 1 to 10.

21. The use of a plant according to any of the claims 1 to 10 for concentrating organic aqueous solvent mixtures.

22. The use of claim 21, wherein the organic aqueous solvent mixture is an aqueous, alcoholic plant extract.

## Revendications

1. Installation de distillation sous vide comprenant
a) un évaporateur flash (1),
b) un compresseur volumétrique de vapeur (12), et
c) un condenseur (8a, 8b) à plusieurs étages, couplé en aval du compresseur de vapeur, dans lequel sont prévus des moyens de retour (16a, 16b) d'au moins une partie du condensat, depuis un étage de condensation dans le produit de queue dans l'évaporateur flash, comprenant une rectification (14) intercalée entre les étages de condensation.

2. Installation de distillation sous vide selon la revendication 1, dans laquelle le condenseur (8) est disposé de manière que le produit de queue (4) serve, avant son retour dans l'évaporateur, de liquide caloporteur pour le condenseur (6, 7, 9, 10).

3. Installation de distillation sous vide selon l'une des revendications 1 ou 2, conçue de manière que soient prévus deux à quatre étages de condensation entre lesquels est intercalée à chaque fois une rectification.

4. Installation de distillation sous vide selon la revendication 1, comportant deux étages de condensation (8a, 8b).

5. Installation de distillation sous vide selon l'une des revendications 1 à 4, conçue de manière que le condensat plus facilement volatil soit amené au produit de queue, mélangé à celui-ci et le mélange amené à l'évaporateur.

6. Installation de distillation sous vide selon l'une des revendications 1 à 5, comprenant en outre des moyens pour la circulation forcée (7) du produit de queue à travers le condenseur.

7. Installation de distillation sous vide selon la revendication 6, dans laquelle le moyen de circulation forcée (7) est une pompe de circulation.

8. Installation de distillation sous vide selon l'une des revendications 1 à 7, qui comporte, en plus du compresseur, une pompe à vide préliminaire.

9. Installation de distillation sous vide selon la revendication 8 dans laquelle la pompe à vide préliminaire est une pompe à liquide fonctionnant à huile ou une pompe à membrane.

10. Installation de distillation sous vide selon l'une des revendications 1 à 9, comprenant sur le côté distillat des moyens de séparation (3) de constituants solides et/ou liquides entraînés, pendant l'évaporation flash, par le produit de tête.

11. Procédé pour la concentration délicate de mélanges de solvants aqueux organiques dans lequel on
a) détend la solution sous vide (1),
b) transporte et comprime volumétriquement (12) le produit de tête,
c) condense le produit de tête en plusieurs étapes (8a, 8b) afin de le séparer en ses constituants plus difficilement volatils et ses constituants plus facilement volatils, une rectification (14) étant prévue entre les étapes de condensation, et
d) renvoie au moins une partie du condensat (16a, 16b) d'au moins une étape au produit de queue (4), avant que celui-ci ne soit utilisé à nouveau à l'étape (a) jusqu'à ce que la concentration souhaitée soit obtenue.

12. Procédé selon la revendication 11 dans lequel les mélanges de solvants aqueux organiques sont des extraits aqueux et alcooliques de plantes.

13. Procédé selon la revendication 11, dans lequel le produit de queue (4) est utilisé comme liquide caloporteur (6, 7, 9, 10) pour les étages de condensation (8a, 8b).

14. Procédé selon l'une des revendications 11 à 13, dans lequel, partant de solutions binaires à l'étape c), il se produit deux étapes de condensation (8a, 8b) et dans lequel au moins une partie du condensat du deuxième étage (16b) est amenée à nouveau au produit de queue (4).

15. Procédé selon l'une des revendications 12 et 14 dans lequel le condensat (16b) est recyclé en une quantité telle que le rapport eau/alcool de la solution reste constant dans le produit de queue (4).

16. Procédé selon l'une des revendications 11 à 15, dans lequel le produit de queue (4) est distillé à l'aide de l'évaporation flash.

17. Procédé selon l'une des revendications 11 à 16 pour concentrer des extraits aqueux et éthanoliques de plantes avec une teneur en éthanol d'au moins 20 % en volume, de préférence de 30 à 70 % en volume.

18. Procédé selon la revendication 11, dans lequel le condensat du dernier étage de condensation est renvoyé entièrement ou en partie dans l'évaporateur.

19. Procédé selon la revendication 11, dans lequel le condensat est renvoyé à l'évaporateur au-dessus du niveau de liquide du produit de queue.

20. Procédé selon l'une des revendications 11 à 19, **caractérisé en ce qu'**il est mis en oeuvre avec une installation de distillation sous vide selon l'une des revendications 1 à 10.

21. Utilisation d'une installation selon l'une des revendications 1 à 10 pour concentrer des mélanges de solvants aqueux organiques.

22. Utilisation selon la revendication 21, dans laquelle le mélange de solvant aqueux organique est un extrait aqueux et alcoolique de plantes.
